# EUROPEAN PATENT SPECIFICATION

(11) **EP 0 493 349 B1**
(45) Date of publication and mention of the grant of the patent: **08.06.1994**
(21) Application number: 91850245.1
(22) Date of filing: 08.10.1991
(51) Int. Cl.: B65G 17/08

(54) **Conveyor chain**
Förderkette
Chaîne de transport

(30) Priority: 21.12.1990 SE 9004102
(43) Date of publication of application: 01.07.1992
(73) Proprietor: SKF SPECIALTY PRODUCTS AB, S-415 50 Göteborg (SE)
(72) Inventor: Abbestam, Göran, S-433 41 Partille (SE); Lachonius, Leif, S-445 01 Surte (SE)
(74) Representative: Forsberg, Lars-Ake

(56) References cited:
- EP-A- 0 172 745
- EP-A- 0 288 409
- EP-A- 0 355 080
- DE-A- 3 913 077
- GB-A- 2 055 731
- GB-A- 2 153 323
- US-A- 4 953 693

## Description

The present invention relates to a plastic chain comprising chain elements which are interconnected via connecting shafts, rods or the like, said chain elements having guide means protruding from said chain elements, at east some of said chain elements further having a recess in at least one lateral side thereof. Such a chain is known from from US-A-4 953 693. The chain according to this publication further having a locking element preventing or limiting axial movement of the connecting shafts. It is the object of the present invention to provide a plastic chain, comprising chain elements in which different parts can be easily mounted or dismantled.

In a plastic chain consisting of chain elements the respective chain elements are connected with each other by means of transverse shafts perpendicularly arranged with respect to the longitudinal axis of the plastic chain. These shafts have to be locked axially to keep the chain assembled. Normally, the chain has to be guided both laterally and horizontally. Separate chain elements allow for the assembly of chains of various widths and lengths. Limiting factors for the flexibility concerning the chain variations are on one hand the locking of the shafts and on the other hand the guiding of the chain by guiding means.

As far as the locking of the shafts is concerned, the state of art presents in principle two solutions. On one hand, plastic shafts can be used. A common solution then is to deform the end of the shaft by melting. The use of this technique, however, naturally results in the shafts not being reusable and moreover, the dismantling becoming more difficult as a destruction of the shaft is required. Another solution consists in that the shafts, which i.a. can be made of metal, are machined in some way and are locked by means of locking washers or similar. (See e.g. US-A-4,832,187 or EP-A-288,409). Also this circumstance makes the flexibility limited and the production furthermore will become more expensive.

For guiding plastic chains and for keeping them in place guiding pins are used, which can be designed to guide a chain both laterally and vertically in relation to the plane of movement. Known solutions thereby show guiding pins either cast or otherwise formed in one piece with a chain element. The guiding pin thereby is fixed in one particular position on a chain element. The possibility to use the same chain element in chains with different shapes and of different types is thereby limited, and to be able to manufacture a desired large variety of plastic chains requires production of a plurality of different variations of the chain element.

The invention has thus as purpose to enable such a simpel and cheap production as possible of components forming part of a plastic chain, thereby even obtaining the maximum possible flexibility in mounting, exchanging and dismounting chains of different shapes. This is achieved with the features contained in the characterizing part of claim 1. Preferred embodiments are defined by the features of the subclaims.

Due to the fact that the locking means and/or the guide means are mountable by means of a connecting element, which e.g. is snapped into a chain element, a large variety of possible connections is obtained and thus the chain width as well as the position of the guiding elements may easily be modified and, moreover, the elements can easily be exchanged. The connecting shafts or rods being locked by means of a locking means without any interference with or special shape of the shaft, one type of shaft can be manufactured matching different chains and the shaft can then be cut to suitable length. Such a shaft which is not affected during assembly or dismantling can of course be reused.
Sometimes it is desirable to have guiding means provided in an optional position within the chain. According to the invention this is made possible either by use of a guide means which is not equipped with a locking element or it is made possible to cut off the locking element of a connecting element equipped with both a locking element and a guiding element, or finally shafts of shorter length can be used, said shorter shafts being locked by means of a locking element present at each guiding element combined with a locking element.

The different embodiments of the invention have in common that different functional components can be manufactured, assembled and dismantled, separately or in combination, by means of a connecting element being mountable e.g. by means of a snap-in connection, in a recess of a chain element.

A detailed description of the invention is given here below with reference to the attached figures, in which
- Fig. 1: is a plain view of a longitudinal portion of a plastic chain,
- Fig. 2: is a cross section of the plastic chain of figure 1 with mounted guide means,
- Fig. 3: is a plane bottom view of a plastic chain illustrating recesses with and without mounted connecting elements,
- Fig. 4: is a longitudinal cross section of the chain of figure 3 with mounted guide means,
- Fig. 5a: is a view of a connecting element with a guiding element,
- Fig. 5b: is a view of a connecting element with a locking element,
- Fig. 5c: is a view of a connecting element with a guiding element and a locking element, and
- Fig. 5d: is an example of the part of a connecting element to be snapped into a recess as well as a locking element and a guiding element, as seen from below.

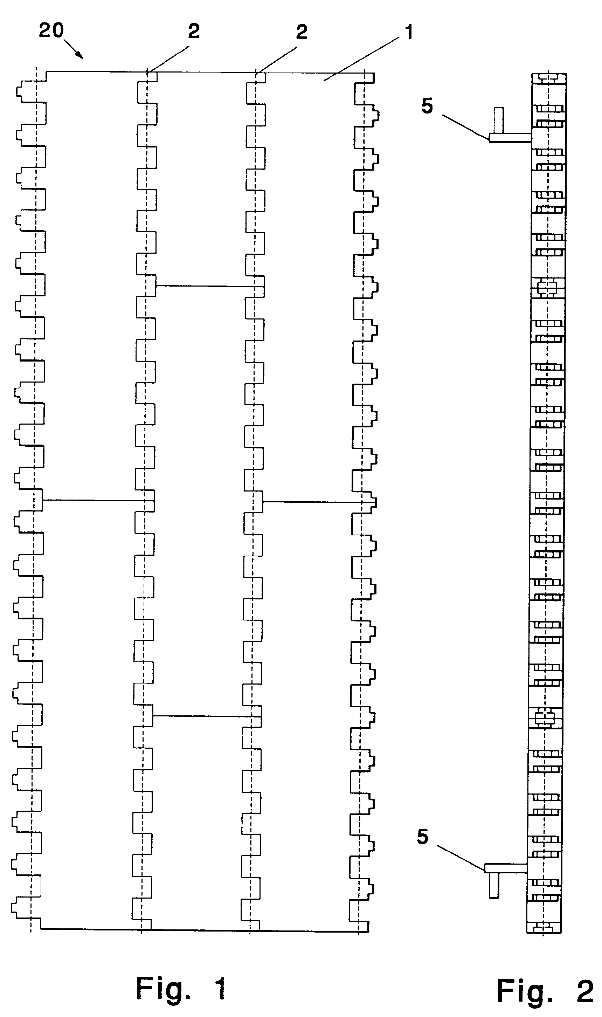

Fig. 1 shows in a planar view a portion of a plastic chain 20 comprising a number of chain elements 1 which are interconnected by connecting shafts or rods 2.

Fig. 2 shows in cross-section a chain provided with guide means 5 projecting perpendicularly from the surface of the chain.

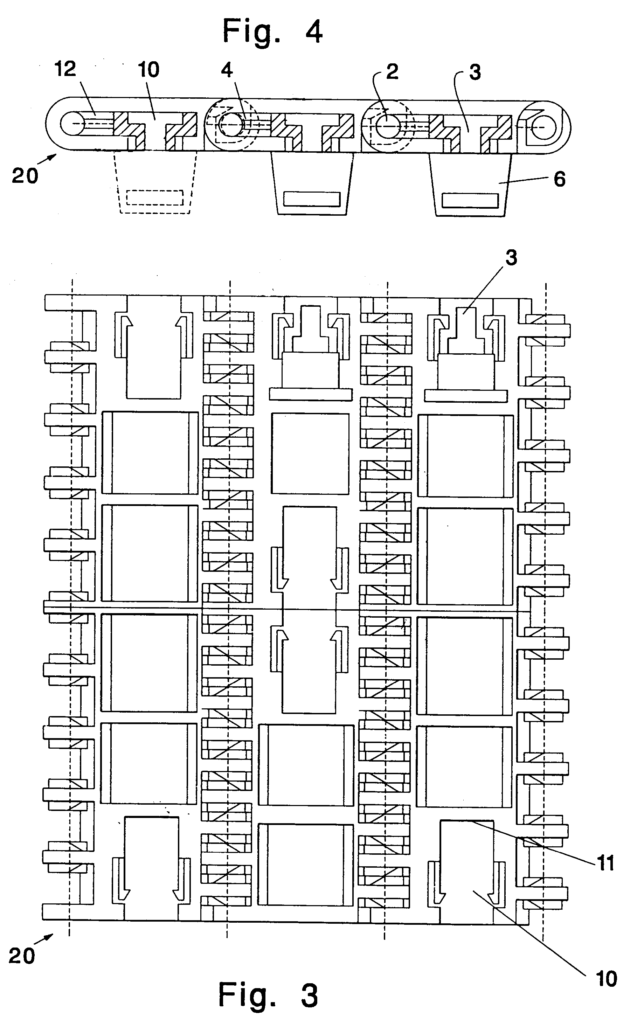

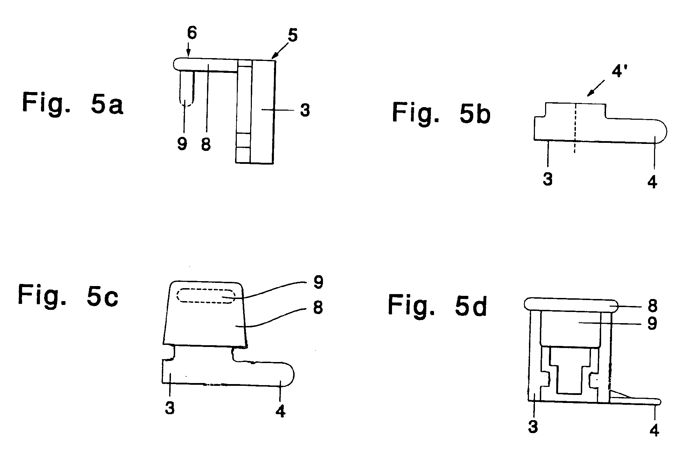

The bottom view of the plastic chain 20 according to Fig. 3, shows how the chain elements 1 are formed with recesses 10 each one having a first, deep, substantially rectangular recess portion 11, which is intended to receive connecting elements 3 which e.g. can be mounted therein by means of a snap-in connection. According to one embodiment as seen in the cross-section according to Fig. 4 a guiding element 6 is securely attached to, or made in one piece with, the connecting element 3 thus forming a guide means 5 as illustrated in Fig. 5a.

Fig. 5b illustrates another embodiment in which a locking element 4 is securely attached to the connecting element 3 thus forming a locking means 4′.

According to a further embodiment the connecting element 3 comprises both a locking element 4 and a guiding element 6 securely attached thereto thus forming the combined locking and guiding means 4′;5, as shown in Figs 5c and 5d. Referring mainly to Fig. 5b a locking means 4′ is formed by a connecting element 3 provided with a locking element 4 which is fixed thereto. Advantageously, the locking element 4 provides an extension of one of the outer boundaries of the connecting element 3, and furthermore is coplanar therewith. By pushing the connecting element 3 into the recess 10 in a direction perpendicular to the chain longitudinal axis (see arrow in figure 3) the locking butt 4 coincides with the chain longitudinal axis and thus makes an angle of 90° with respect to a connecting shaft 2. When mounting the connecting element 3 in the recess 10 the shaft is axially locked by the locking butt 4. Connecting shafts 2 can in this way be assembled, dismantled and reused in a very simple way. As the shaft 2 is not deformed or machined in any way to guarantee a locking it is sufficient to produce one kind of shaft 2 which then is cut to the desired length normally adapted to the requested chain width. It is also possible to lock shorter shafts 2 within a chain in those cases, where the chain is requested to be designed in such a manner. The shafts 2 are assembled/dismantled without the use of any tools.

Guide means 5 (Fig. 5a) are used to guide the plastic chain 20. The guide means 5 comprises a connecting element 3, to which a guiding element 6 is connected. The connecting element 3 is then taken up by means of a snap-in connection in a recess 10 of a chain element 1.

The guide means can guide a plastic chain both in axial and in horisontal direction by use of a guiding shoulder comprising a first guiding portion 8 for guiding axially and a second guiding portion 9 for guiding perpendicularly with relation to the plane of mevement. This makes it possible to mount guiding elements 6 in a very simple way in an arbitrary position on the plastic chain 20 as well as to vary the chain 20 and adapt it to various situations. In the embodiment of the invention enabling the maximum flexibility and freedom of choice a connecting element 3 is provided with both a locking butt 4 and a guiding element 6. In figure 5c a connecting element 3 with both locking butt 4 and guiding element 6 is shown from the side, i.e. in the direction, in which the element is pushed into a recess 10 in a chain element 1. Figure 5d shows the same element from underneath the plastic chain 20 with an example of design corresponding to a snap-in into the recess 10. The recess 10 in the chain element 1 is designed with a first deep, substantially rectangular recess portion 11 being formed in such a way as to enable the reception of a connecting element 3 by means of a snap-in connection as well as with a more shallow second recess portion 12 extending in a way so as to cover the bores housing the connecting shafts 2. The locking butt 4 is thus received in said second portion 12 of the recess 10 so that the connecting shaft 2 is axially locked without any interference from outside. In the case where a connecting element 3, which is fixed to both the locking butt 4 and the guiding element 6, is manufactured, but where the use of guiding elements in an optional position within a plastic chain is required, the locking butt itself can be cut off. Alternatively, shorter shafts can be used, which are locked at each guiding pin by a corresponding locking butt 4.

## Claims

1. A plastic chain (20) comprising chain elements (1) which are interconnected via connecting shafts (2), said chain elements having guide means (5) protruding from said chain elements, at least some of said chain elements (1) further having a recess (10) in at least one lateral side thereof,
**characterized in**
that each such recess is shaped such as to accomodate a chain element connecting element (3), which is detachably mounted in said recess, said connecting element (3) having securely attached thereto at least one guiding element (6) constituting said guide means (5) and/or a locking element (4), known per se, and preventing or limiting axial movement of the connecting shafts (2).

2. Plastic chain (20) according to claim 1
**characterized** in that the connecting element (3), the guiding element (6) and/or the locking element (4) are formed in one piece.

3. Plastic chain (20) according to claim 1 or 2,
**characterized in**
that the locking element (4) is formed as a coplanar extension of one of the boundaries of the connecting element (3), said lockig element being essentially perpendicularly mounted with respect to the axis of the connecting shaft (2).

4. Plastic chain (20) according to claim 3, wherein the connecting element (3) is provided both with a guiding element (6) and a locking element (4),
**characterized in**
that the guiding element (6) is arranged at the boundary of the connecting element (3) opposing the boundary having an extension forming the locking element (4).

5. Plastic chain (20) according to anyone of the preceding claims,
**characterized in**
that the guiding element (6) comprises a first guiding portion (8) arranged essentially perpendicularly to a chain element (1) and aligned longitudinally in the direction of movement and a second guiding portion (9) arranged essentially in parallel with the chain element (1) and essentially perpendicularly to the first portion (8) for guiding the chain laterally and vertically in relation to the plane of movement.

6. Plastic chain (20) according to any one of claims 1-5, wherein the connecting element (3) incorporates a locking element,
**characterized in**
that the recess (10) comprises a deep recess portion (11) for receiving the connecting element (3) and a shallow recess portion (12), said shallow recess portion (12) being formed as a unilateral longitudinal elongation of the outer part of the deep recess portion (11) and being located and shaped thus that the locking element (4) of the connecting element (3), in its position locking the connecting shaft (2), is completely inserted therein, when the connecting element is snap-fittingly arrested in the deep recess portion, thus giving the chain element (1) a plane outer surface of the chain element (1).

## Patentansprüche

1. Kunststoffkette (20) mit Kettenelementen (1), die über Verbindungsbolzen (2) miteinander verbunden sind, wobei die Kettenelemente von ihnen abstehende Führungsmittel (5) besitzen und weiterhin wenigstens einige der Kettenelemente (1) in wenigstens einer ihrer Querseiten eine Ausnehmung (10) aufweisen, **dadurch gekennzeichnet**, daß jede Ausnehmun derart geformt ist, daß sie ein Verbindungsglied (3) für das Kettenelement aufnehmen kann, welches lösbar in der Ausnehmung montiert ist, wobei das Verbindungsglied (3), fest mit ihm verbunden, wenigstens ein Führungsmittel (5) bildendes Führungsglied (6) und/oder ein Verschlußelement (4) aufweist, das als solches bekannt ist und die axiale Bewegung der Verbindungsbolzen (2) verhindert oder beschränkt.

2. Kunststoffkette (20) nach Anspruch 1, **dadurch gekenn****zeichnet**, daß das Verbindungsglied (3), das Führungsglied (6) und/oder das Verschlußelement (4) einstückig geformt sind.

3. Kunststoffkette (20) nach Anspruch 1 oder 2, **dadurch ge****kennzeichnet,** daß das Verschlußelement (4) als eine in derselben Ebene liegende Verlängerung eines der Ränder des Verbindungsglieds (3) ausgebildet ist, wobei das Verschlußelement im wesentlichen quer bezüglich der Achse des Verbindungsbolzens (2) montiert ist.

4. Kunststoffkette (20) nach Anspruch 3, bei der das Verbindungsglied (3) sowohl ein Führungsglied (6) als auch ein Verschlußelement (4) besitzt, **dadurch gekennzeichnet**, daß das Führungsglied (6) an dem Rand des Verbindungsglieds (3) angeordnet ist, der dem Rand mit der das Verschlußelement bildenden Verlängerung gegenüberliegt.

5. Kunststoffkette (20) nach einem der vorhergehenden Ansprüche, **dadurch gekennzeichnet**, daß das Führungsglied (6) ein erstes, im wesentlichen quer zu einem Kettenelement (1) und längsfluchtend in Richtung der Bewegung angeordnetes Führungsteil (8) und ein zweites Führungsteil (9) aufweist, das im wesentlichen parallel zu dem Kettenelement (1) und im wesentlichen quer zu dem ersten Führungsteil (8) angeordnet ist, um die Kette seitlich und senkrecht in bezug auf die Bewegungsebene zu führen.

6. Kunststoffkette (20) nach einem der Ansprüche 1 bis 5, bei des das Verbindungsglied (3) ein Verschlußelement besitzt, **dadurch gekennzeichnet**, daß die Ausnehmung (10) einen tiefen Ausnehmungsteil (11) zur Aufnahme des Verbindungsglieds (3) und einen flachen Ausnehmungsteil (12) aufweist, der als eine einseitige Längsausdehnung des äußeren Bereichs des tiefen Ausnehmungsteils (11) ausgebildet und so angeordnet und geformt ist, daß das Verschlußelement (4) des Verbindungsglieds (3) in seiner den Verbindungsbolzen (2) verriegelnden Position Vollständig darin eingeführt ist, wenn das Verbindungsglied in Schnappverbindung in dem tiefen Ausnehmungsteil eingerastet ist, und damit dem Kettenelement (1) eine plane äussere Oberfläche gibt.

## Revendications

1. Chaîne en plastique (20) comprenant des maillons de chaîne (1) qui sont interconnectés via des axes de liaison (2), lesdits maillons de chaîne ayant des moyens de guidage (5) qui dépassent desdits maillons, certains au moins desdits maillons de chaîne (1) ayant en outre un évidement (10) dans l'un au moins de leurs côtés latéraux, **caractérisée** en ce que chacun de ces évidements a une forme telle qu'il puisse loger un élément de liaison (3) de maillon de chaîne qui est monté de façon détachable dans ledit évidement, ledit élément de liaison (3) ayant au moins un élément guidant (6) qui lui est solidement fixé et qui constitue ledit moyen de guidage (5) et/ou un élément de verrouillage (4), connu, empêchant ou limitant un mouvement axial des axes de liaison (2).

2. Chaîne en plastique (20) selon la revendication 1, **caractérisée** en ce que l'élément de liaison (3), l'élément guidant (6) et/ou l'élément de verrouillage (4) sont formés en une seule pièce.

3. Chaîne en plastique (20) selon la revendication 1 ou 2, **caractérisée** en ce que l'élément de verrouillage (4) est formé comme un prolongement coplanaire de l'un des bords de l'élément de liaison (3), ledit élément de verrouillage étant monté de façon essentiellement perpendiculaire par rapport à l'axe géométrique de l'axe de liaison (2).

4. Chaîne en plastique (20) selon la revendication 3, dans laquelle l'élément de liaison (3) est pourvu à la fois d'un élément guidant (6) et d'un élément de verrouillage (4), **caractérisée** en ce que l'élément guidant (6) est placé sur le bord de l'élément de liaison (3) qui est opposé au bord ayant un prolongement qui constitue l'élément de verrouillage (4).

5. Chaîne en plastique (20) selon l'une quelconque des précédentes revendications, **caractérisée** en ce que l'élément guidant (6) comprend une première partie guidante (8) disposée essentiellement perpendiculairement à un maillon de chaîne (1) et alignée longitudinalement dans la direction de déplacement, et une seconde partie guidante (9) placée essentiellement parallèle au maillon de chaîne (1) et essentiellement perpendiculaire à la première partie (8) pour guider la chaîne latéralement et verticalement par rapport au plan de déplacement.

6. Chaîne en plastique (20) selon l'une quelconque des revendications 1 à 5, dans laquelle l'élément de liaison (3) incorpore un élément de verrouillage, **caractérisée** en ce que l'évidement (10) comprend une partie d'évidement profond (11) pour recevoir l'élément de liaison (3) et une partie d'évidement peu profond (12), ladite partie d'évidement peu profond (12) étant formée comme un prolongement longitudinal unilatéral du côté extérieur de la partie d'évidement profond (11) et étant située et mise en forme de telle sorte que l'élément de verrouillage (4) de l'élément de liaison (3) y soit complètement inséré lorsqu'il est dans sa position qui verrouille l'axe de liaison (2), quand l'élément de liaison est arrêté par emboîtement à déclic dans la partie d'évidement profond, ce qui donne au maillon de chaîne (1) une surface extérieure plane de maillon de chaîne (1).
